# FASCICULE DE BREVET EUROPEEN

(11) **EP 3 105 070 B1**
(45) Date de publication et mention de la délivrance du brevet: **11.04.2018**
(21) Numéro de dépôt: 15709233.9
(22) Date de dépôt: 10.02.2015
(51) Int. Cl.: B60C 27/16

(54) **DISPOSITIF ANTIDERAPANT**
GLEITSCHUTZEINRICHTUNG
ANTI-SKID DEVICE

(30) Priorité: 11.02.2014 FR 1451053
(43) Date de publication de la demande: 21.12.2016
(73) Titulaire: Joubert Productions, 63600 Ambert (FR)
(72) Inventeur: JOUBERT, Xavier, 63600 Ambert (FR); JOUBERT, Thierry, 63600 Ambert (FR); KAELIN, Régis, 63600 Saint Ferreol des Cotes (FR); PAILLARD, Thomas, 63670 Orcet (FR)
(74) Mandataire: Cabinet Laurent & Charras
(86) Numéro de dépôt international: PCT/FR2015/050322
(87) Numéro de publication internationale: WO 2015/121577

(56) Documents cités:
- EP-A1- 0 298 906
- EP-A2- 0 248 387
- DE-U1- 29 700 484
- FR-A3- 2 926 491

## Description

### DOMAINE TECHNIQUE

L'invention se rapporte au domaine des dispositifs antidérapants pour roues de véhicules automobiles, et plus particulièrement à de tels dispositifs de type frontal ou facial, c'est-à-dire fixés sur la surface visible de la jante d'une telle roue.

De tels dispositifs se présentent généralement sous la forme d'un chemin de roulement comportant des patins antidérapants rapportés sur la bande de roulement d'un pneumatique automobile, ledit chemin de roulement étant maintenu en place sur la bande de roulement à l'aide de bras radiaux solidarisés à un organe central, lui-même fixé à la jante de la roue considérée. Ces dispositifs antidérapants sont ainsi rapportés sur des roues de véhicules en cas de présence de neige ou de glace sur la chaussée.

L'invention vise plus particulièrement le chemin de roulement, et notamment l'élément de jonction destiné à former un organe de liaison entre deux sections consécutives à propriétés antidérapantes formant le chemin de roulement du dispositif antidérapant.

### ETAT ANTERIEUR DE LA TECHNIQUE

On a décrit dans le document EP 0 351 362, l'utilisation de pièces déformables, également appelées éléments d'élasticité, positionnées entre deux patins antidérapants d'un dispositif antidérapant pour roues de véhicule automobile. De tels éléments d'élasticité sont aptes à rattraper le jeu entre la surface périphérique du pneumatique ou bande de roulement, et le chemin de roulement antidérapant du dispositif antidérapant destiné à être rapporté sur ledit pneumatique, notamment en cas de neige ou de glace ou verglas sur la chaussée. Ces éléments sont de type monolithique en forme de U.

Cependant, de tels éléments d'élasticité sont généralement réalisés en un matériau métallique, dont l'élasticité est obtenue au moyen d'une forme particulière. De plus, de tels éléments, de par leur constitution en matériau métallique, présentent un poids important, ce qui peut dégrader les performances du véhicule, et surtout, affecter leur manipulation, notamment lors de la mise en place du dispositif antidérapant sur le pneumatique.

En outre, ils peuvent également contribuer à la détérioration, d'une part, du revêtement de la chaussée lorsque le dispositif antidérapant est utilisé en l'absence de neige, et d'autre part du pneumatique. Enfin, en cas de casse accidentelle du dispositif antidérapant, ces éléments peuvent dégrader le véhicule, et plus particulièrement la zone de la carrosserie où sont logés la roue, ainsi que les capteurs susceptibles d'être positionnés dans cette région.

Le document DE29700484 décrit un dispositif anti-dérapant pour roues de véhicule automobile dont le chemin de roulement comporte des éléments de jonction dépourvus de toute capacité de déformation.

Ainsi, un premier objectif de l'invention est de permettre la réalisation d'un dispositif antidérapant, à la fois léger, simple de conception, permettant une grande adaptabilité sur une pluralité de diamètres de roues ou de pneumatiques

Un second objectif visé par l'invention est de permettre de disposer d'un dispositif antidérapant, autorisant tout à la fois un placage efficace du chemin de roulement contre la bande de roulement d'un pneumatique, et ce, pour une pluralité de dimensions desdits pneumatiques, et un montage aisé dudit dispositif antidérapant par l'utilisateur final.

Un troisième objectif de l'invention est de fournir un dispositif sûr et ne dégradant pas la chaussée ou le véhicule en cas de casse.

Enfin, un quatrième objectif recherché est de permettre la réalisation d'un chemin de roulement présentant une épaisseur inférieure à 9 millimètres.

### EXPOSÉ DE L'INVENTION

L'invention concerne donc un dispositif antidérapant pour roues de véhicules automobiles, comprenant :
- un chemin de roulement destiné à être plaqué sur la bande de roulement d'un pneumatique d'une roue de véhicule, comprenant lui-même une pluralité de moyens développant des propriétés antidérapantes reliés entre eux au moyen d'éléments de jonction ;
- des bras radiaux permettant de maintenir ledit chemin de roulement sur la bande de roulement dudit pneumatique, reliés à un organe central fixé sur la jante de la roue considérée.

Selon l'invention :
- l'élément de jonction comporte au moins deux branches orientées sensiblement selon la dimension principale du chemin de roulement, lesdites branches étant solidarisées l'une à l'autre au moins dans leur zone centrale ;
- il comporte une capacité de déformation permettant aux extrémités des branches de se rapprocher ou de s'éloigner les unes des autres ;
- il comporte au moins un cordon textile formé par des filaments haute-ténacité ou un câble métallique, le cordon textile ou le câble métallique étant maintenu de manière efficace au sein de l'élément de jonction, et plus précisément au sein de chacune de ses branches par des moyens appropriés.

En d'autres termes, le dispositif antidérapant de l'invention présente une certaine capacité de déformation, puisque chacune des branches des éléments de jonction entrant dans la constitution du chemin de roulement peut se déformer de façon à éloigner ou rapprocher les unes des autres les extrémités desdites branches d'un même élément de jonction. Une telle capacité de déformation est particulièrement avantageuse puisqu'elle permet d'adapter la circonférence du dispositif antidérapant à une pluralité de diamètres de roues de véhicule.

Si comme évoqué précédemment, l'élément de jonction de l'invention comporte une capacité de déformation, cette déformation est cependant limitée par la mise en oeuvre d'un cordon textile ou d'un câble métallique, ce, dans le but de bloquer l'allongement du chemin de roulement sous l'effet de la force centrifuge, lorsque le véhicule se déplace, et donc éviter notamment les risques d'éjection du dispositif antidérapant hors du pneumatique sur lequel il est monté et les contacts avec le passage de roue. Dans les faits, on limite l'amplitude de déformation des éléments de jonction, et notamment de leurs branches. Corollairement, on réduit, voire on annule les risques de casse desdits éléments de jonction.

Par ailleurs, la mise en oeuvre d'un tel cordon ou d'un tel câble favorise le transfert du couple de motricité en limitant les déformations possibles de l'ensemble du chemin de roulement et en procurant la résistance nécessaire lors des freinages d'urgence et des forts patinages.

Selon un mode de réalisation particulier, le cordon textile peut comporter une âme formée par des filaments à base de fibres d'aramide, et de manière générale à base de fibres textiles haut module (Vectran®, Dyneema®, ....).

Ainsi, un tel cordon textile peut être formé de différents matériaux pour constituer une âme centrale en un premier matériau, et une gaine périphérique en un second matériau protégeant les fibres de l'âme contre certaines sollicitations, et notamment contre le cisaillement ou l'abrasion, mais également contre les agressions extérieures de toutes natures. Les filaments à base de fibres d'aramide sont très résistants en traction et notamment, permettent d'obtenir une résistance à la rupture en traction par cordon, conforme aux normes en vigueur, soit supérieure à 200daN. Typiquement, la résistance à la rupture en traction est d'environ 350 daN.

Avantageusement, le cordon textile peut comporter une gaine formée par des filaments à base de fibres d'un matériau choisi dans le groupe comprenant les polyamides, les polyesters, le polypropylène.

De cette façon, la gaine protège les fibres de l'âme du cordon textile. De tels matériaux, tels que le polyamide ou le polyester permettent en effet de fournir au cordon textile, des caractéristiques importantes de résistance au cisaillement et/ ou à l'abrasion.

En pratique, le cordon textile peut comporter une section circulaire, dont le diamètre est compris entre 2 et 6 millimètres.

Un tel diamètre du cordon textile permet en effet de conférer à l'élément de jonction une épaisseur inférieure aux sections ou portions antidérapantes du chemin de roulement. Ainsi, lors du roulement sur route ou sur neige d'un dispositif antidérapant, seules les sections antidérapantes sont en contact avec celle-ci. Un tel diamètre du cordon textile permet par ailleurs de garantir une résistance à la rupture en traction adaptée en cas de freinage d'urgence notamment. Cela permet également d'obtenir des patins d'une épaisseur totale inférieure à 9 millimètres.

Selon une première forme de réalisation de l'invention, le chemin de roulement est continu, les éléments de jonction étant reliés aux sections antidérapantes adjacentes en suite d'une opération de moulage, à l'exception des sections assurant la liaison avec les organes, et notamment les bras radiaux assurant le maintien du chemin de roulement auquel appartiennent lesdits éléments de jonction sur la bande de roulement du pneumatique considéré.

Selon cette configuration, le chemin de roulement est constitué d'une pluralité de sous-ensembles, solidarisés entre eux au niveau de leurs extrémités libres, chaque sous ensemble étant constitué par l'alternance d'éléments de jonction et de sections antidérapantes, et les zones de solidarisation des sous-ensembles entre eux étant constituées par les sections assurant le maintien du chemin de roulement sur la bande de roulement du pneumatique considéré.

Typiquement, le nombre de ces sous-ensembles est compris entre trois et six, avantageusement égal à 4. En raison de ce nombre, on dispose alors de l'élasticité suffisante pour permettre l'adaptation d'un tel dispositif de taille déterminée à plusieurs tailles de pneumatiques, sans altérer sa capacité à demeurer en place sur la bande de roulement dudit pneumatique.

Dans cette configuration, chaque sous-ensemble comporte deux cordons textiles ou deux câbles métalliques transitant sensiblement selon la direction principale du chemin de roulement, au voisinage des bords latéraux respectifs dudit sous-ensemble. Les extrémités des cordons ou des câbles de deux sous-ensembles adjacents sont cousues entre elles ou associées entre elles avant de procéder à l'étape de réalisation notamment par moulage de la section assurant le maintien du chemin de roulement sur la bande de roulement.

Selon un autre mode de réalisation de l'invention, le chemin de roulement est discontinu, chaque élément de jonction étant reliée aux sections antidérapantes adjacentes au moyen d'organes de liaison, et typiquement des agrafes, bouclées au niveau des extrémités libres des branches constituant lesdits éléments de jonction.

Autrement dit, chaque élément de jonction est formé par une pièce unique comportant une structure monobloc, sensiblement en forme de X. Une telle structure est particulièrement avantageuse en comparaison des éléments de jonction de l'art antérieur, formés par un assemblage de plusieurs pièces distinctes, nécessitant des moyens d'assemblage complexes à mettre en oeuvre et dont le risque de rupture, compte tenu du nombre pièces le constituant, est plus important.

Selon une première variante de l'invention, les deux branches de l'élément de jonction sont solidarisées l'une à l'autre par une tige ou branche centrale. L'élément de jonction ne forme donc plus un X à proprement parler, mais davantage un H.

Cette tige ou branche centrale sert de ressort de rappel en cas de traction sur les quatre extrémités des branches latérales, propre à induire le retour de l'élément de jonction à sa forme initiale après avoir subi une contrainte. Cette structure permet ainsi d'absorber les variations de périmètre des pneumatiques, et notamment, de ne disposer que d'un seul dispositif antidérapant de taille donnée pour une pluralité de diamètres de pneumatiques.

En outre, les moyens de solidarisation dont sont pourvues les extrémités des branches peuvent être de nature diverse. Il peut par exemple s'agir d'une excroissance, au niveau de laquelle va s'articuler une pièce complémentaire ménagée au sein des sections adjacentes du chemin de roulement. Mais il peut également s'agir d'orifices débouchants, chacun des orifices étant destiné à être traversé par une agrafe solidaire de ladite section adjacente du chemin de roulement. Les agrafes forment ainsi une boucle au travers des orifices débouchants.

Ainsi, et selon une première forme de réalisation de l'invention, le cordon présente à ses deux extrémités une surépaisseur, résultant par exemple de surmoulage de matière rigide, tel que par exemple du polyamide 6 ou du polyamide 6,6, constituant une zone d'ancrage lorsque l'élément de jonction est réalisé, notamment par surmoulage.

Selon une autre forme de réalisation de l'invention, le cordon textile ou le câble métallique est replié sur lui-même pour former au moins une boucle enlaçant deux orifices débouchants de deux extrémités de branches en regard, dans la configuration selon laquelle les moyens de solidarisation de l'élément de jonction aux sections adjacentes du chemin de roulement sont constitués par des orifices débouchants.

De cette manière, l'élément de jonction monolithique présente une très grande résistance à l'élongation. En effet, les filaments mis en oeuvre au sein du cordon sont à haute-ténacité, et typiquement constitués de fibres, dont l'allongement avant rupture est inférieur à 4 %. Ainsi, la boucle formée par le cordon textile permet d'éviter tout arrachement d'un orifice débouchant au niveau des deux extrémités d'une branche.

Chaque cordon textile présent dans une branche peut ainsi faire au moins une boucle autour d'un orifice débouchant permettant de recevoir les agrafes solidaires de patins antidérapants.

Selon un premier mode de réalisation, les deux extrémités libres d'un cordon textile peuvent être solidarisées entre elles.

Dans ce cas, le cordon textile forme une boucle unique enlaçant les deux orifices débouchants. Une telle solidarisation des extrémités libres du cordon textile peut par exemple être obtenue par des procédés de collage, de thermo-soudage, de sertissage, de soudure ou de couture notamment.

Selon un second mode de réalisation, les deux extrémités libres d'un cordon textile peuvent être solidarisées avec une portion centrale du cordon textile.

Selon ce mode de réalisation, le cordon textile forme alors deux boucles distinctes enlaçant chacune un orifice débouchant de l'élément de jonction. La solidarisation des extrémités libres du cordon textile avec une portion centrale de celui-ci peut en outre être réalisée de de diverses manières, et notamment également par collage, thermo-soudage, sertissage, soudure ou couture.

Selon un mode de réalisation particulier, l'élément de jonction peut comporter des évidements permettant à des excroissances d'un moule de maintenir en position le cordon textile lors de l'injection d'un matériau de surmoulage.

Autrement dit, le cordon textile est maintenu à l'intérieur d'un moule au moyen d'excroissances émergeant d'un noyau ou encore de l'une et/ou de l'autre des parois formant le moule d'injection. Ces excroissances maintiennent alors en position le cordon textile pendant l'injection du matériau de surmoulage du cordon textile. L'élément de jonction peut ainsi comporter une pluralité d'évidements pouvant notamment être positionnés à proximité de chaque orifice débouchant et/ou d'une zone centrale des branches latérales.

Avantageusement, le matériau de surmoulage peut être réalisé en polyuréthane, et de manière générale, en un élastomère.

En d'autres termes, l'élément de jonction monolithique peut présenter un aspect extérieur d'une pièce d'injection moulée dans l'un des matériaux tels que cités précédemment. Le polyuréthane peut par exemple présenter une souplesse relativement importante, garantissant une élasticité importante de l'élément de jonction, et conférant par conséquent une capacité de déformation entre les deux orifices débouchant d'une même branche latérale, et de manière générale entre les extrémités desdites branches latérales.

Un tel matériau peut notamment présenter une dureté comprise entre 60 et 70 Shore A et qui est avantageusement inférieure à la dureté utilisée pour réaliser les patins antidérapants, pouvant eux-mêmes être réalisés en polyuréthane. Quelle que soit la nature desdites sections adjacentes antidérapantes, celles-ci présentent un allongement très limité, pour ne pas dire nul, en comparaison avec les éléments de jonction de l'invention.

Selon une variante avantageuse de l'invention, la branche ou tige centrale est associée à une structure supplémentaire, typiquement en forme de croix. Les extrémités de chacune des branches constitutives de la croix sont solidaires des extrémités des branches latérales.

Ce faisant, on limite l'effet dit de parallélogramme, et plus précisément, on s'affranchit des problématiques de déformation des branches latérales sous l'effet des contraintes exercées sur le chemin de roulement. On conserve en effet une forme sensiblement rectangulaire de l'élément de jonction, et corollairement l'élasticité de la branche centrale.

Selon encore une autre variante de l'invention, la branche centrale peut être remplacée par une structure planaire, de forme carrée ou en losange, et sur laquelle sont solidarisée les branches latérales.

Ces dernières peuvent présenter une forme rectiligne ou courbée, tel que par exemple en forme de S Dans ce dernier cas, les deux branches latérales peuvent être symétriques l'une de l'autre par rapport à un plan médian passant par le centre de la branche ou de la structure de jonction.

### DESCRIPTION SOMMAIRE DES FIGURES

La manière de réaliser l'invention, et les avantages qui en découlent, ressortiront bien de la description du mode de réalisation qui suit, donné à titre indicatif, et non limitatif, à l'appui des figures annexées dans lesquelles :
- la figure 1 est une vue en perspective partielle d'une première forme de réalisation du dispositif antidérapant équipé d'éléments de jonction conforme à l'invention ;
- les figures 2 et 3 sont des représentations schématiques selon deux vues de face de deux variantes d'un tel élément de jonction ;
- la figure 4 est une vue en coupe d'un cordon textile destiné à être agencé à l'intérieur d'un élément de jonction conforme à l'invention ;
- les figures 5 et 6 sont des représentations schématiques en perspective d'un autre mode de réalisation de l'élément de jonction de l'invention, respectivement vue du dessus et du dessous ;
- la figure 7 est également une vue schématique en perspective de ce second mode de réalisation de l'invention, permettant de visualiser le cordon textile agencé à l'intérieur ;
- la figure 8 est une vue schématique en perspective d'une troisième mode de réalisation de l'élément de jonction de l'invention.
- la figure 9 est une vue en perspective partielle d'une seconde forme de réalisation du dispositif antidérapant équipé d'éléments de jonction conforme à l'invention ;
- la figure 10 est une représentation schématique en perspective d'une partie d'un sous ensemble mis en oeuvre dans le cadre de cette seconde forme de réalisation de l'invention, faisant apparaître limitativement les éléments de jonction et les cordons textiles.
- la figure 11 est une représentation schématique de l'une des empreintes d'un moule apte à la réalisation des éléments de jonction.
- la figure 12 est une vue analogue à la figure 10, mais complétée par les sections antidérapantes.
- la figure 13 est une vue analogue à la figure 12, partiellement éclatée, permettant d'observer la continuité des cordons textiles tout au long du sous-ensemble, et dont la figure 14 est une vue plus en détail.
- la figure 15 est une représentation schématique de l'une des empreintes du moule de réalisation des sections antidérapantes.

### EXPOSE DETAILLE DE L'INVENTION

Comme déjà évoqué, l'invention concerne un dispositif antidérapant de type frontal ou facial.

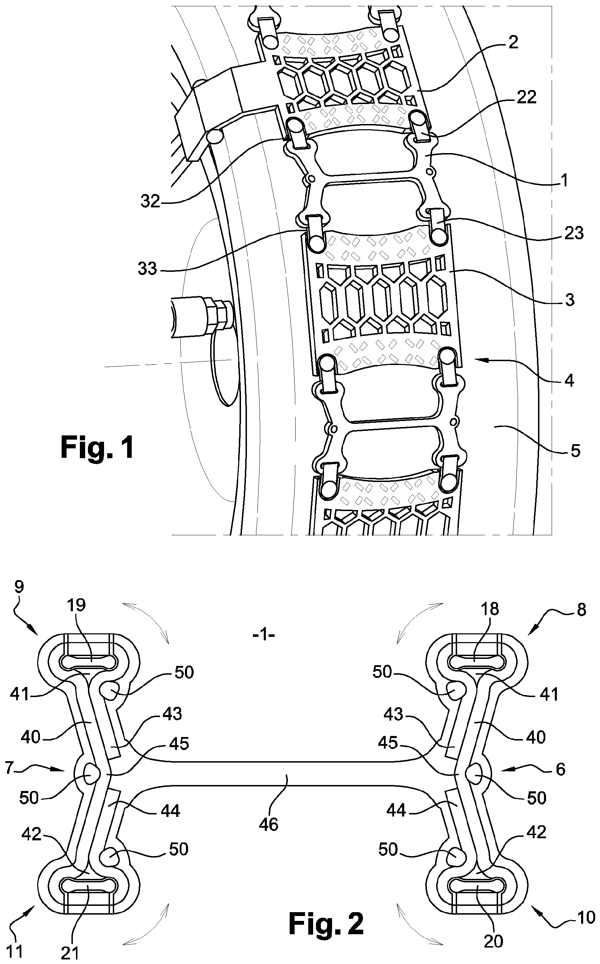

Tel que représenté à la figure 1, une première forme de réalisation d'un tel dispositif antidérapant **4** est rapporté sur la bande de roulement d'un pneumatique de roue de véhicule **5,** et comporte une pluralité de patins antidérapants **2, 3,** également qualifies de sections antidérapantes, permettant d'améliorer l'adhérence du véhicule sur un sol recouvert de neige ou de glace notamment. Un tel dispositif antidérapant **4** comporte également une pluralité d'éléments de jonction **1,** selon une première forme de réalisation de l'invention, solidarisés avec deux patins antidérapants **2, 3** successifs. En d'autres termes, et ainsi qu'on peut bien l'observer sur la figure 1, le chemin de roulement du dispositif antidérapant est constitué par l'alternance de patins antidérapants **2, 3** et d'éléments de jonction **1,** ledit chemin de roulement étant cependant discontinu, en raison de la présence de moyens de fixation **22, 23, 32, 33** entre les éléments de jonction et les patins antidérapants.

De fait, chaque patin antidérapant **2, 3** présente quatre agrafes **22, 23, 32, 33** permettant de solidariser chaque patin antidérapant **2, 3** avec deux éléments de jonction monolithiques adjacents.

Selon un premier mode de réalisation, et tel que représenté à la figure 2, chaque élément de jonction monolithique **1** comporte deux branches latérales **6, 7** solidarisées entre elles par une tige ou branche centrale **46.** Chaque branche latérale **6, 7** comporte ainsi au niveau d'une extrémité **8, 9, 10, 11** un orifice débouchant **18, 19, 20, 21** permettant l'introduction d'une agrafe **22, 23, 32, 33.**

En outre, l'élément de jonction **1** comporte deux cordons textiles **40** intégrés à l'intérieur d'un matériau formant l'enveloppe de l'élément de jonction monolithique **1,** et positionnés au niveau des deux branches latérales **6, 7** Le cordon textile **40** est ainsi surmoulé d'un matériau d'injection tel que notamment du polyuréthane.

Par ailleurs, et tel que représenté dans cette variante, chaque cordon textile **40** permet de former deux boucles **41, 42,** chacune permettant d'enlacer un orifice débouchant **18, 19, 20, 21.** Les extrémités libres **43, 44** du cordon textile **40** sont alors solidarisées avec une portion centrale **45** de ce cordon textile **40.** Une telle solidarisation peut notamment être réalisée par couture, sertissage thermo-soudage ou collage.

Une telle géométrie des branches latérales **6, 7** permet alors de conférer à l'élément de jonction **1** une capacité de déformation particulièrement utile. Une telle capacité de déformation permet en effet d'adapter le dispositif antidérapant d'une taille donnée à différents diamètres de roues. Il permet également de compenser certaines variations dimensionnelles instantanées d'une roue de véhicule lors de sollicitations importantes, et par exemple, en cas de freinage d'urgence. Le dispositif antidérapant doit donc pouvoir se déformer de façon importante et rapide pour compenser les déformations du pneumatique sur lequel il est monté. Les extrémités libres **8, 9, 10, 11** de l'élément de jonction **1** sont ainsi aptes à se rapprocher les unes des autres et/ou à s'éloigner les unes des autres.

Cependant, de par la mise en oeuvre des cordons textiles **40,** cette capacité de déformation est limitée. Ce faisant, le chemin de roulement du dispositif antidérapant demeure sur la bande de roulement du pneumatique considéré lorsque le véhicule progresse, nonobstant la force centrifuge qui s'exerce sur ledit chemin de roulement.

Avantageusement, un tel élément de jonction **1** comporte des évidements **50** permettant à des excroissances d'un noyau, ou d'un moule d'injection, de maintenir en position les cordons textiles **40** à l'intérieur du moule, et avantageusement au niveau du plan de joint dudit moule.

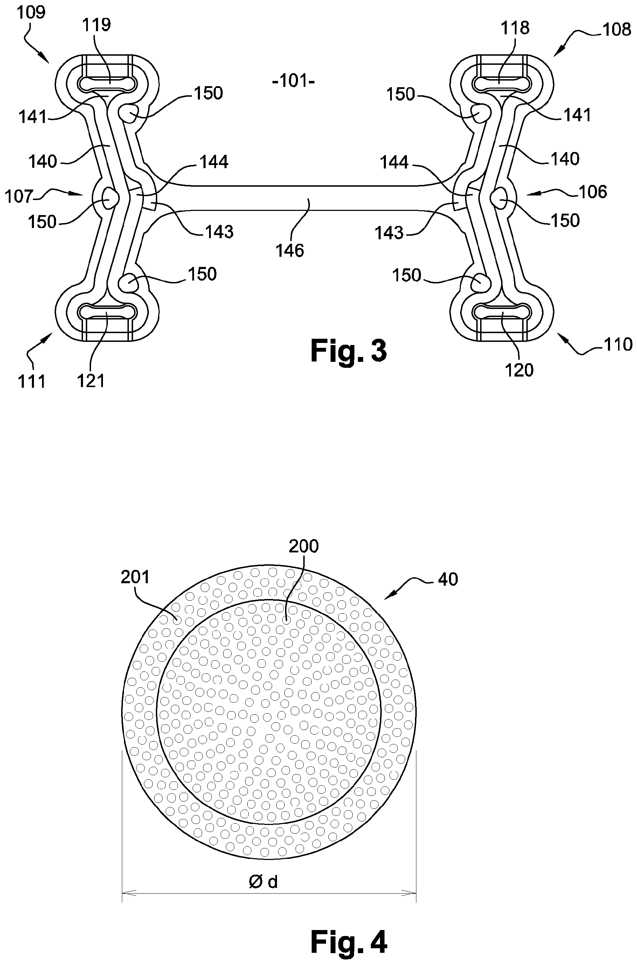

Selon une autre variante telle que représentée à la figure 3, l'élément de jonction monolithique **101** peut également comporter deux cordons textiles **140** repliés sur eux-mêmes de façon à former une unique boucle **141** enlaçant les deux orifices débouchant **118, 119, 120, 121** ménagés au voisinage des extrémités libres **108, 109, 110, 111** d'une même branche **106, 107.** Dans ce cas, les extrémités libres **143, 144** de chaque cordon textile **140** sont solidarisées entre elles par exemple à proximité de la tige centrale **146** de l'élément de jonction **101.**

Comme précédemment, des évidements **150** peuvent être ménagés dans le matériau destiné à envelopper les cordons textiles **140** de façon à maintenir lesdits cordons textiles **140** dans une position prédéterminée à l'intérieur du moule d'injection.

La tige centrale **46, 146** reliant entre elles les branches latérales permet de conférer à l'élément de jonction une force de rappel, tendant à repositionner, après contraintes, lesdites branches latérales dans leur configuration d'origine, et en l'espèce sensiblement en forme de V, et ce, dans l'objectif de pouvoir, avec un dispositif antidérapant de taille déterminée, s'adapter à plusieurs diamètres de pneumatiques. Typiquement, la variation de l'espacement entre les deux extrémités d'une même branche latérale, c'est-à-dire entre les deux pointes du V est de 7 à 12 millimètres, pour justement permettre une telle adaptabilité, sans pour autant compromettre la bonne tenue du chemin de roulement sur la bande de roulement.

Tel que représenté à la figure 4, le cordon textile **40** peut comporter une âme formée par des filaments haute-ténacité tel que des filaments à base de fibres d'aramide. Cette âme **200** peut alors comporter une résistance limite à la rupture supérieure à 200 daN. De même, le cordon textile **40** peut comporter une gaine **201** formée par des filaments à base de fibres d'un matériau tel que du polyamide 6 ou 6.6. Un tel matériau permet en effet de garantir une bonne tenue dans le temps du cordon textile, notamment soumis à des contraintes de cisaillement importantes.

Tel qu'illustré, un tel cordon textile **40** peut présenter une section circulaire dont le diamètre d est compris entre 2 et 4 millimètres, de façon à ne pas former de surépaisseur au niveau de la bande de roulement du dispositif antidérapant.

Un tel cordon textile **40** est ensuite noyé à l'intérieur d'une matrice de polyuréthane permettant notamment de ne pas endommager la route ou le véhicule en cas de casse du dispositif antidérapant.

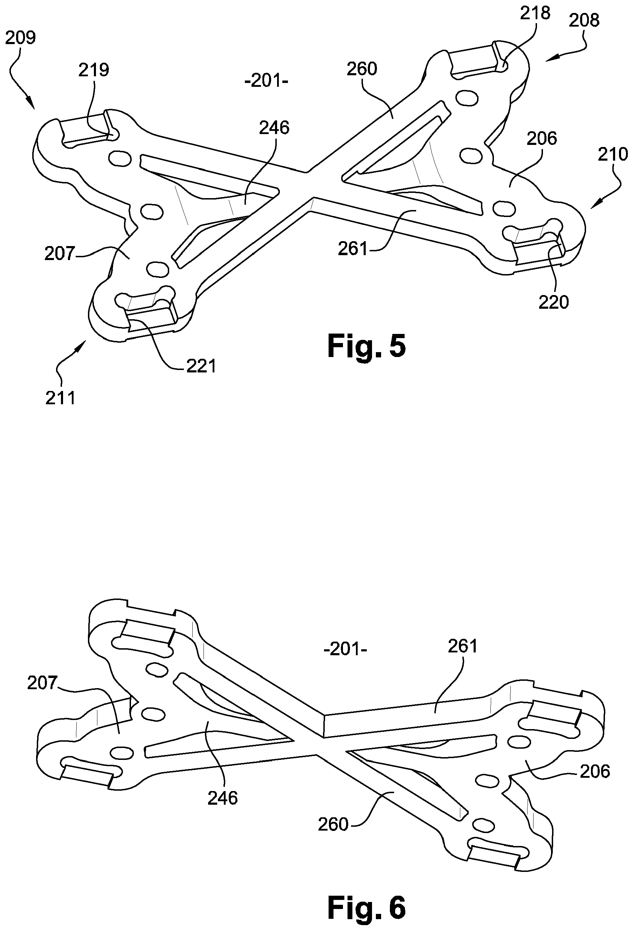

Selon un second mode de réalisation de l'élément de jonction **201** de l'invention, plus particulièrement décrit en relation avec les figures 5 à 7, la tige ou branche centrale **246** est associée avec une croix, dont les deux branches **260, 261** sont solidarisées aux branches latérales **206, 207** au voisinage de leur extrémité libre **208, 209, 210, 211.**

La mise en oeuvre de cette croix confère à l'élément de jonction une certaine résistance à la déformation, et notamment, évite une trop importante déformation des branches latérales **206, 207** lors que le chemin de roulement est soumis à des contraintes.

Comme on peut bien l'observer au sein des figures 5 et 6, la tige ou branche centrale **246** est en quelque sorte noyée au niveau de la zone d'intersection des branches **260, 261** de la croix dans ladite croix. De fait, l'ensemble demeure monolithique, et résulte de moulage, en mettant en oeuvre les mêmes matériaux que ceux précédemment évoqués en relation avec le premier mode de réalisation de l'invention.

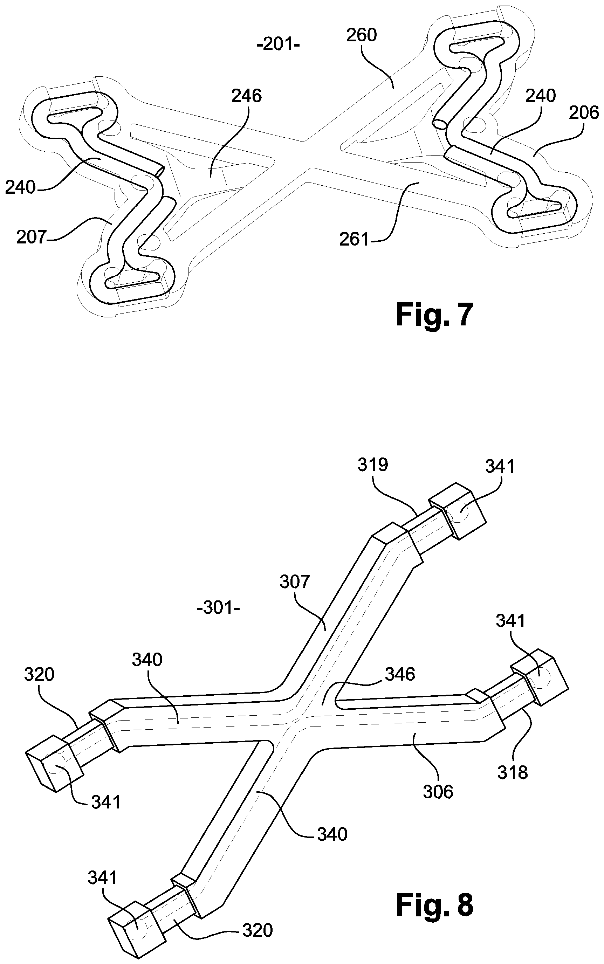

De même, ce second mode de réalisation intègre également un cordon **240** au niveau de chaque branche latérale (voir figure 7), de même nature et de mêmes caractéristiques que celui décrit en relation avec le premier mode de réalisation. Ledit cordon a donc également vocation à venir entourer les orifices débouchants **218, 219, 220, 221** ménagés au voisinage des extrémités des branches latérales **206, 207.**

Selon une troisième forme de réalisation de l'invention représentée en figure 8, l'élément de jonction **301** est constitué de deux branches **306, 307** s'étendant selon la dimension principale du chemin de roulement. Ces deux branches sont solidarisées l'une à l'autre limitativement en leur zone centrale **346,** et en l'absence de tige ou branche centrale. De fait, l'élément de jonction de l'invention adopte véritablement la forme d'un X.

On a également représenté dans cette forme de réalisation simplifiée de l'invention, la mise en oeuvre d'un cordon textile **340,** de même nature que ceux précédemment décrits. Cependant, comme on peut l'observer sur la figure 8, les moyens de solidarisation de l'élément de jonction avec les sections adjacentes du chemin de roulement ne sont pas ici constitués d'orifices débouchants, mais de zones **318, 319, 320, 321** de diamètre ou de dimension réduite, au niveau desquelles viennent coopérer de manière complémentaire, des moyens ménagés sur lesdites sections adjacentes.

Dans ce cas, les cordons sont maintenus en place, lors du surmoulage, en générant des excroissances **341** à leurs deux extrémités. Ces excroissances peuvent résulter par exemple du surmoulage de matière rigide, tel que du polyamide 6 ou du polyamide 6,6, constituant une zone d'ancrage lorsque l'élément de jonction est réalisé, notamment par surmoulage.

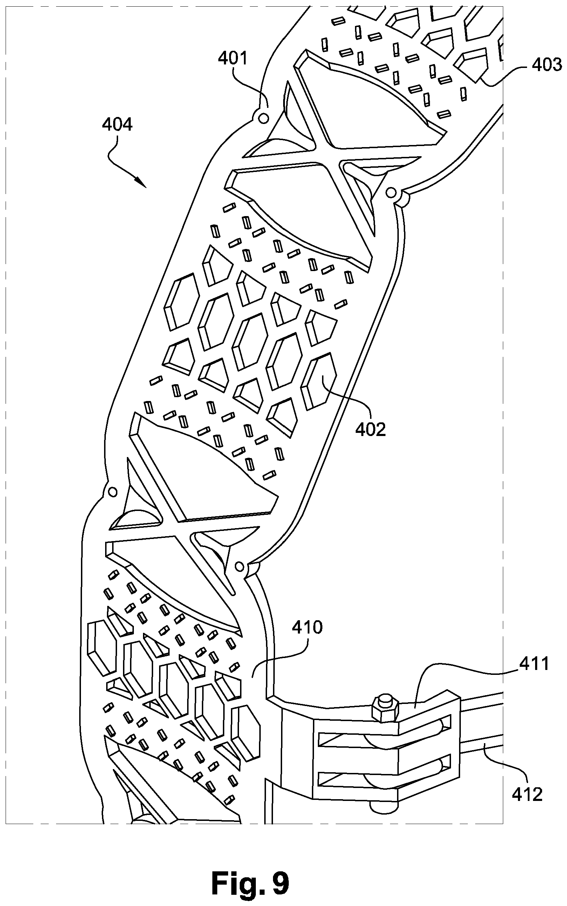

Selon une seconde forme de réalisation du dispositif antidérapant de l'invention, illustré en relation avec les figures 9 à 15, le chemin de roulement est continu. En effet, il n'y a plus à proprement parler de moyens de solidarisation des éléments de jonction **401** aux sections adjacentes antidérapantes **402, 403** du chemin de roulement. En effet, si lesdits éléments de jonction décrits dans cette forme de réalisation sont sensiblement identiques à ceux décrits précédemment, et assurent toujours cette capacité de déformation limitée recherchée, en revanche, ils s'intègrent dans des sous-ensembles, typiquement au nombre de 4 par chemin de roulement, et constitués par l'alternance desdits éléments de jonction et des patins antidérapants.

Ainsi, chaque sous ensemble est typiquement constitué de 3 éléments de jonction **401** reliant entre elles 4 sections antidérapantes, les deux sections antidérapantes extrêmes **410** étant solidarisées à un organe **411** assurant, en coopération avec les bras radiaux **412** solidarisés à un flasque central (non représenté), lui-même fixé sur la jante de la roue considérée, le placage dudit chemin de roulement sur la bande de roulement du pneumatique.

Cette continuité résulte également des cordons textiles **405** mis en oeuvre.

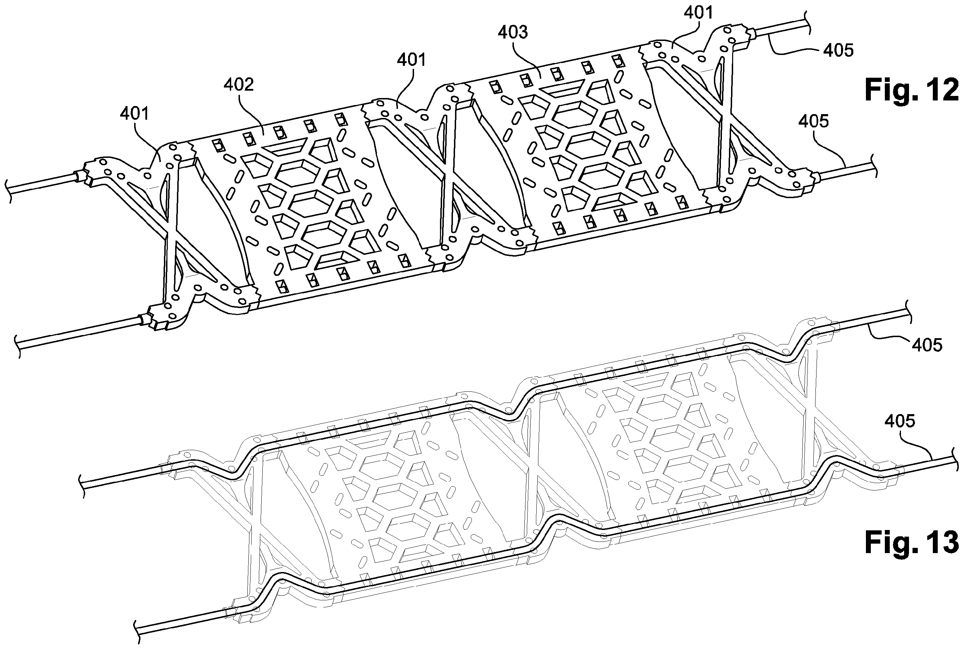

En effet, contrairement à la première forme de réalisation du dispositif antidérapant décrite précédemment, chaque élément de jonction n'a pas ses propres cordons, mais il y a deux cordons par sous-ensemble, s'étendant sensiblement selon la direction principale du chemin de roulement, au voisinage des bords latéraux respectifs dudit sous-ensemble (voir par exemple en figure 12).

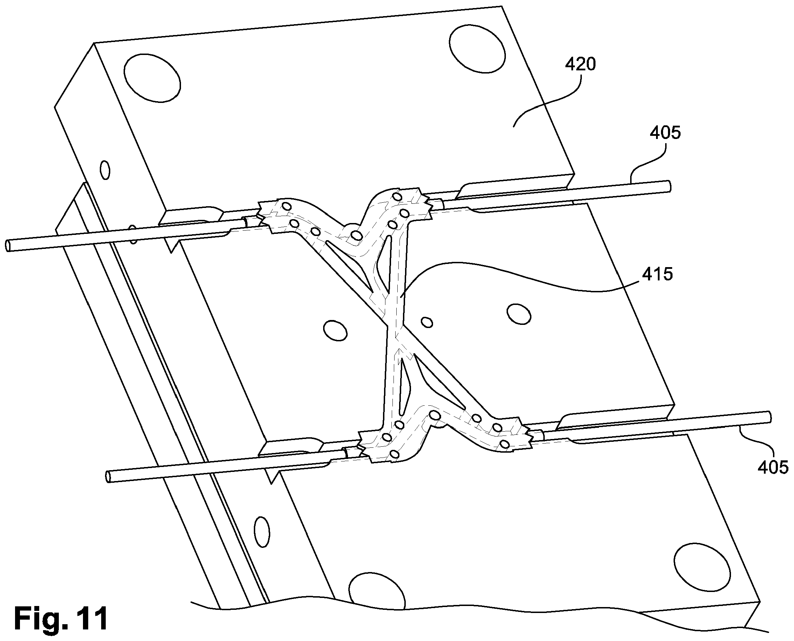

A cet effet, les éléments de jonction **401** sont surmoulés (figure 11) alors même que les cordons **405** traversent le moule de part en part. L'empreinte inférieure **420** du moule a ainsi été représentée, mettant en évidence la forme **415** correspondant à la forme souhaitée de l'élément de jonction.

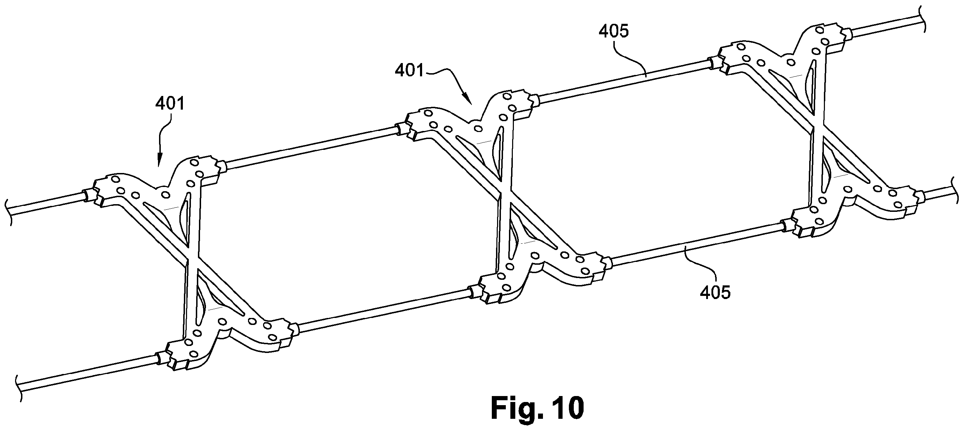

On obtient ainsi un premier ensemble illustré à la figure 10, dans lequel seuls les éléments de jonction **401** ont été réalisés, et reliés entre eux par les cordons textiles **405.**

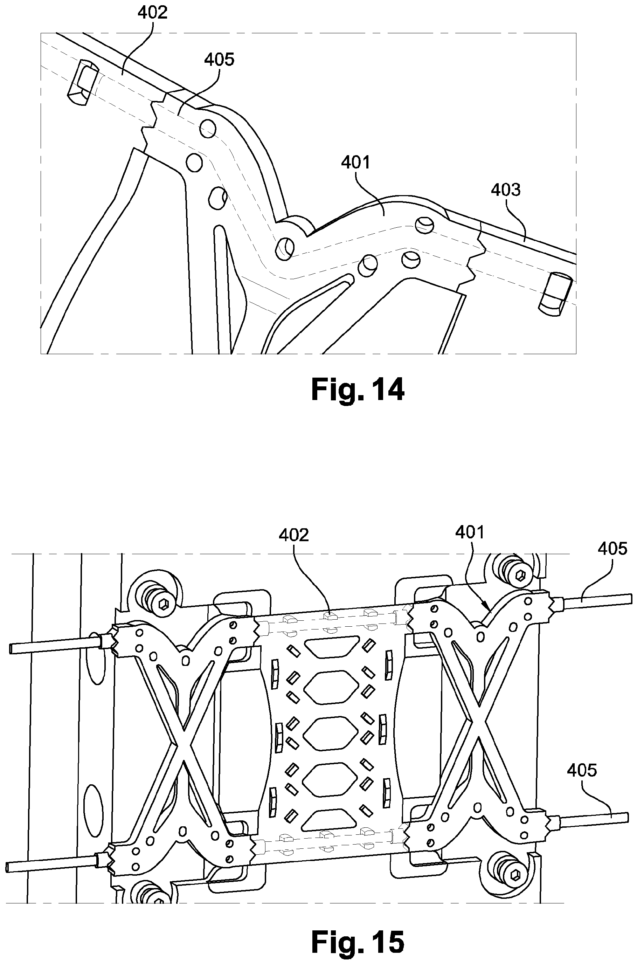

Afin d'obtenir le sous-ensemble dans son intégralité, tel qu'illustré en figure 12, il convient ensuite de procéder à une seconde étape de surmoulage, cette fois ci des patins antidérapants **402, 403.** A cet effet, on met en oeuvre un moule (Cf. figure 15), définissant en creux la forme correspondant auxdits patins, apte à recevoir le cas échéant un insert métallique pour former crampons sur la glace, et permettant d'assurer la continuité matière entre les éléments de jonction **401** et les patins antidérapants **402, 403,** les cordons étant également reçus dans l'empreinte, afin de conserver la continuité de ces derniers.

On obtient l'élément illustré en figure 12, ou encore en figure 13, dans laquelle on a artificiellement fait apparaître les cordons **405,** alors même qu'ils sont surmoulés, tant au niveau des éléments de jonction **401** que des patins antidérapants **402, 403.**

Au niveau des sections antidérapantes extrêmes **410,** les extrémités libres des cordons **405** sont cousues entre elles, afin d'assurer la continuité desdits cordons sur tout le périmètre du dispositif antidérapant. Puis, on procède au surmoulage, à l'instar de ce qui a été décrit en relation avec la figure 15, afin de constituer lesdites sections extrêmes munies des organes **411,** au niveau desquels sont ultérieurement fixés les bras radiaux **412.**

Le matériau mis en oeuvre pour les éléments de jonction et les patins antidérapants, outre les sections extrêmes est typiquement du polyuréthane. La dureté de ce matériau est en principe plus faible pour les éléments de jonction que pour les patins, afin de leur conférer la déformabilité recherchée. Par exemple, la dureté du polyuréthane constitutif des éléments de jonction est de 50 Shore A, alors que celle du polyuréthane constitutif des patins peut atteindre 90 Shore A. Cependant, il peut être envisagé que ces différents éléments aient la même dureté.

Quel que soit le mode de réalisation de l'invention, on dispose en moyenne d'une douzaine d'éléments de jonction et autant ou sensiblement autant de patins antidérapants pour un chemin de roulement intégral. Ce faisant, on dispose d'une capacité de déformation du chemin de roulement comprise typiquement entre 84 à 144 millimètres, c'est-à-dire suffisante pour différentes tailles de pneumatiques.

Il ressort de ce qui précède qu'un dispositif antidérapant conforme à l'invention, présente de nombreux avantages, et notamment :
- de par la mise en oeuvre des éléments de jonction, il comporte une capacité de déformation apte à permettre une adaptabilité à différents diamètres de roues et/ou à des variations rapides et instantanées de la forme de la roue, et sa mise en place est facilitée sur le pneumatique d'une roue par l'utilisateur final
- il est réalisé en un matériau apte à ne pas endommager la route en cas d'utilisation sur une route déneigée ;
- en cas de casse du dispositif antidérapant, il ne présente pas de danger important pour l'intégrité du véhicule ;
- il présente un poids très faible et garantit ainsi des performances optimales pour le véhicule, outre facilite les opérations de montage sur le pneumatique considéré ;
- il est inoxydable, contrairement aux dispositifs à chaines classiquement utilisés ;
- il permet un conditionnement plié du dispositif antidérapant, sans générer de noeud ou un enchevêtrement bien connus avec des dispositifs ou des éléments de jonction présentant des maillons de chaine ;
- il supporte les freinages d'urgence de par sa capacité à se déformer de manière limitée ;
- il résiste à l'endurance, typiquement sur des distances voisines d'au minimum 120 km sur asphalte ;
- Enfin, il permet de plier de manière aisée le dispositif antidérapant, en raison de la souplesse de l'élément de jonction.

## Revendications

1. Dispositif antidérapant (4, 404) pour roues de véhicules automobiles, comprenant :
• un chemin de roulement destiné à être plaqué sur la bande de roulement d'un pneumatique d'une roue (5) de véhicule, comprenant lui-même une pluralité de moyens (2, 3, 402, 403) développant des propriétés antidérapantes reliés entre eux au moyen d'éléments de jonction (1, 101, 201, 301, 401), les éléments de jonction comportant au moins deux branches (6, 7 ; 106, 107 ; 206, 207 ; 306 ; 307), dites branches latérales orientées sensiblement selon la dimension principale du chemin de roulement, lesdites branches étant solidarisées l'une à l'autre au moins dans leur zone centrale
• des bras radiaux (412) permettant de maintenir ledit chemin de roulement sur la bande de roulement dudit pneumatique, reliés à un organe central fixé sur la jante de la roue considérée ;
***caractérisé* :**
• **en ce que** lesdits éléments de jonction présentent une capacité de déformation permettant aux extrémités desdites branches de se rapprocher ou de s'éloigner les unes des autres ;
• et **en ce qu'**il comporte au moins un cordon textile (40, 140, 240, 340, 405) formé par des filaments haute-ténacité ou au moins un câble métallique, ledit cordon textile ou ledit câble métallique étant maintenu au sein de chacun des éléments de jonction, et plus précisément au sein de chacune de ses branches par des moyens appropriés.

2. Dispositif antidérapant (4, 404) pour roues de véhicules automobiles selon la revendication 1, ***caractérisé* en ce que** ledit au moins un cordon textile (40, 140, 240, 340, 405) comporte une âme formée par des filaments à base de fibres d'aramide, et de manière générale à base de fibres textiles haut module.

3. Dispositif antidérapant (4, 404) pour roues de véhicules automobiles selon la revendication 2, ***caractérisé* en ce que** ledit au moins un cordon textile (40, 140, 240, 340, 405) comporte une gaine formée par des filaments à base de fibres d'un matériau choisi dans le groupe comprenant les polyamides, les polyesters, le polypropylène.

4. Dispositif antidérapant (4, 404) pour roues de véhicules automobiles selon l'une des revendications 1 à 3, ***caractérisé* en ce que** ledit au moins un cordon textile comporte une section circulaire, dont le diamètre est compris entre 2 et 6 millimètres.

5. Dispositif antidérapant (4, 404) pour roues de véhicules automobiles selon l'une des revendications 1 à 4, ***caractérisé* en ce que** le chemin de roulement est continu, les éléments de jonction (401) étant reliés aux sections antidérapantes adjacentes (402, 403) en suite d'une opération de moulage, à l'exception des sections (410) assurant la liaison avec les bras radiaux (411) assurant le maintien du chemin de roulement auquel appartiennent lesdits éléments de jonction sur la bande de roulement du pneumatique considéré.

6. Dispositif antidérapant (4, 404) pour roues de véhicules automobiles selon la revendication 5, ***caractérisé* en ce que** le chemin de roulement est constitué d'une pluralité de sous-ensembles, solidarisés entre eux au niveau de leurs extrémités libres, chaque sous ensemble étant constitué par l'alternance d'éléments de jonction (401) et de sections antidérapantes (402, 403), et les zones de solidarisation des sous-ensembles entre eux étant constituées par les sections (410) assurant le maintien du chemin de roulement sur la bande de roulement du pneumatique considéré.

7. Dispositif antidérapant (4, 404) pour roues de véhicules automobiles selon la revendication 6, ***caractérisé* en ce que** le nombre des sous-ensembles est compris entre trois et six, avantageusement égal à 4.

8. Dispositif antidérapant (4, 404) pour roues de véhicules automobiles selon l'une des revendications 6 et 7, ***caractérisé* en ce que** chaque sous-ensemble comporte deux cordons textiles (405) ou deux câbles métalliques transitant sensiblement selon la direction principale du chemin de roulement, au voisinage des bords latéraux respectifs dudit sous-ensemble, les extrémités des cordons de deux sous-ensembles adjacents étant cousues entre elles ou celles des deux câbles métalliques étant associées l'une à l'autre, avant de procéder à l'étape de réalisation notamment par moulage de la section (410) assurant le maintien du chemin de roulement sur la bande de roulement.

9. Dispositif antidérapant (4, 404) pour roues de véhicules automobiles selon l'une des revendications 1 à 4, ***caractérisé* en ce que** le chemin de roulement est discontinu, chaque élément de jonction étant reliée aux sections antidérapantes adjacentes au moyen d'organes de liaison, et typiquement des agrafes, bouclées au niveau des extrémités libres des branches constituant lesdits éléments de jonction.

10. Dispositif antidérapant (4, 404) pour roues de véhicules automobiles selon l'une des revendications 1 à 9, ***caractérisé* en ce que** les deux branches (6, 7 ; 106, 107 ; 206 ; 207) des éléments de jonction sont solidarisées l'une à l'autre par une tige ou branche centrale (46, 146, 246).

11. Dispositif antidérapant (4, 404) pour roues de véhicules automobiles selon la revendication 10, ***caractérisé* en ce que** la branche ou tige centrale (246) de chaque élément de jonction est associée à une structure supplémentaire, en forme de croix, les extrémités de chacune des branches (260, 261) constitutives de la croix étant solidaires des extrémités des branches latérales.

12. Dispositif antidérapant (4, 404) pour roues de véhicules automobiles selon l'une des revendications 10 et 11, ***caractérisé* en ce que** la branche ou tige centrale est remplacée par une structure planaire, de forme carrée ou en losange, et sur laquelle sont solidarisée les branches latérales.

13. Dispositif antidérapant (4, 404) pour roues de véhicules automobiles selon l'une des revendications 1 à 13, ***caractérisé* en ce que** les branches latérales présentent une forme rectiligne ou courbée, tel que par exemple en forme de S.

14. Dispositif antidérapant (4, 404) pour roues de véhicules automobiles selon la revendication 9, ***caractérisé* en ce que** l'extrémité libre de chacune des branches latérales est en outre munie de moyens de solidarisation aux sections adjacentes antidérapantes dudit chemin de roulement du dispositif antidérapant.

15. Dispositif antidérapant (4, 404) pour roues de véhicules automobiles selon la revendication 14, ***caractérisé* en ce que** les moyens de solidarisation sont constitués de zones (318, 319, 320, 321) de diamètre ou de dimension inférieure par rapport au reste dudit élément de jonction, et **en ce que** les extrémités dudit cordon présentent une protubérance ou excroissance (341), faisant fonction d'ancrage dudit cordon au sein des branches.

16. Dispositif antidérapant (4, 404) pour roues de véhicules automobiles selon la revendication 14, ***caractérisé* en ce que** les moyens de solidarisation sont constitués par des orifices débouchants, destinés à être traversés par un élément de solidarisation avec deux sections du dispositif antidérapant, ledit cordon étant replié sur lui-même pour former au moins une boucle enlaçant deux orifices débouchants de deux extrémités de branches latérales en regard.

17. Dispositif antidérapant (4, 404) pour roues de véhicules automobiles selon l'une des revendications 1 à 16, ***caractérisé* en ce que** les éléments de jonction et les patins antidérapants sont réalisés en polyuréthane, et de manière générale en élastomère.

18. Dispositif antidérapant (4, 404) pour roues de véhicules automobiles selon l'une des revendications 1 à 17, ***caractérisé* en ce que** la capacité de déformation du chemin de roulement selon la direction de la bande de roulement est comprise entre 84 et 144 millimètres.

## Patentansprüche

1. Antirutschvorrichtung (4, 404) für Kraftfahrzeugräder, bestehend aus:
• einer Führungsfläche, bestimmt zur Montage auf der Lauffläche eines Reifens eines Kraftfahrzeugrades (5), die selbst verschiedene Vorrichtungen (2, 3, 402, 403) enthält, die Antirutsch- Eigenschaften entwickeln können, miteinander verbunden über Verbindungselemente (1, 101, 201, 301, 401), wobei diese Verbindungselemente mindestens zwei Schenkel (6, 7; 106, 107; 206, 207; 306; 307), die sogenannten Seitenschenkel, enthalten, die im Wesentlichen entlang der Hauptdimension der Führungsfläche ausgerichtet sind, diese beiden Schenkel sind mindestens in ihrem Zentralbereich aneinander befestigt.
• durch radiale Arme (412) kann diese Führungsfläche auf der Lauffläche dieses Reifens gehalten werden, wobei diese Arme mit einem Zentralorgan verbunden sind, das auf der Felge des entsprechenden Rades befestigt ist;
**gekennzeichnet dadurch, dass**:
• diese Verbindungselemente eine Verformungskapazität aufweisen, durch die es den Endstücken dieser Schenkel möglich wird, sich aneinander anzunähern oder voneinander zu entfernen;
• und dass sie mindestens eine Textillitze (40, 140, 240, 340, 405) enthält, die aus hochfesten Filamenten besteht ist oder mindestens ein Metallseil, diese Textillitze oder dieses Metallseil werden dabei in jedem Verbindungselement und genauer in jedem seiner Schenkel durch geeignete Vorrichtungen gehalten.

2. Antirutschvorrichtung (4, 404) für Kraftfahrzeugräder, nach Anspruch 1, **dadurch gekennzeichnet, dass** diese mindestens eine Textillitze (40, 140, 240, 340, 405) einen Kern aus Filament auf Basis von Aramidfasern und ganz allgemein auf Basis von Hochmodul - Textilfasern enthält.

3. Antirutschvorrichtung (4, 404) für Kraftfahrzeugräder, nach Anspruch 2, **dadurch gekennzeichnet, dass** diese mindestens eine Textillitze (40, 140, 240, 340, 405) einen Mantel aus Filament auf Basis von Fasern aus einem Material, ausgewählt aus der Gruppe bestehend aus Polyamid, Polyestern und Polypropylen, umfasst.

4. Antirutschvorrichtung (4, 404) für Kraftfahrzeugräder, nach einem der Ansprüche 1 bis 3, **dadurch gekennzeichnet, dass** diese mindestens eine Textillitze einen ringförmigen Abschnitt enthält, dessen Durchmesser zwischen 2 und 6 Millimetern liegt.

5. Antirutschvorrichtung (4, 404) für Kraftfahrzeugräder, nach einem der Ansprüche 1 bis 4, **dadurch gekennzeichnet, dass** die Führungsfläche durchgängig ist, die Verbindungselemente (401) sind mit den angrenzenden Antirutsch-Abschnitten (402, 403) verbunden, als Ergebnis eines Gießvorgangs, mit Ausnahme der Abschnitte (410), die die Verbindung mit den radialen Armen (411) gewährleisten und sicherstellen, dass die Führungsfläche gehalten wird, zu der diese Verbindungselemente auf der Lauffläche des entsprechenden Reifens gehören.

6. Antirutschvorrichtung (4, 404) für Kraftfahrzeugräder, nach Anspruch 5, **dadurch gekennzeichnet, dass** die Führungsfläche aus mehreren Untergruppen besteht, die an ihren freien Endstücken miteinander verbunden sind, jede Untergruppe besteht abwechselnd aus Verbindungselementen (401) und Antirutsch- Abschnitten (402, 403) und die Zonen zur Befestigung der Untergruppen aneinander, bestehen aus Abschnitten (410), die sicherstellen, dass die Führungsfläche auf der Lauffläche des entsprechenden Reifens gehalten wird,

7. Antirutschvorrichtung (4, 404) für Kraftfahrzeugräder, nach Anspruch 6, **dadurch gekennzeichnet, dass** die Anzahl der Untergruppen zwischen drei und sechs beträgt, es ist von Vorteil, wenn sie gleich 4 ist.

8. Antirutschvorrichtung (4, 404) für Kraftfahrzeugräder, nach einem der Ansprüche 6 und 7, **dadurch gekennzeichnet, dass** jede Untergruppe zwei Textillitzen (405) oder zwei Metallseile enthält, die im Wesentlichen entlang der Hauptrichtung der Führungsfläche durchführen, in Nähe der jeweiligen Seitenränder dieser Untergruppe, die Endstücke der Litzen der beiden benachbarten Untergruppen werden miteinander vernäht, bzw. die der beiden Metallseile miteinander verbunden, bevor der Schritt der Herstellung insbesondere durch Guss des Abschnitts (410) durchgeführt wird, der dafür sorgt, dass die Führungsfläche auf der Lauffläche gehalten wird.

9. Antirutschvorrichtung (4, 404) für Kraftfahrzeugräder, nach einem der Ansprüche 1 bis 4, **dadurch gekennzeichnet, dass** die Führungsfläche unterbrochen ist, jedes Verbindungselement ist mit den angrenzenden Antirutsch- Abschnitten über Verbindungsorgane verbunden, und in typischer Weise durch Klammern, die in Höhe der freien Endstücke der Schenkel befestigt sind, aus denen diese Verbindungselemente bestehen.

10. Antirutschvorrichtung (4, 404) für Kraftfahrzeugräder, nach einem der Ansprüche 1 bis 9, **dadurch gekennzeichnet, dass** die beiden Schenkel (6, 7 ; 106, 107 ; 206 ; 207) der Verbindungselemente aneinander über eine Stange oder einen zentralen Schenkel (46, 146, 246) befestigt sind.

11. Antirutschvorrichtung (4, 404) für Kraftfahrzeugräder, nach Anspruch 10, **dadurch gekennzeichnet, dass** der zentrale Schenkel oder die zentrale Stange (246) jedes Verbindungselementes mit einer zusätzlichen, kreuzförmigen Struktur verbunden ist, die Endstücke jedes der Schenkel (260, 261), die das Kreuz bilden, sind an den Endstücken der Seitenschenkel befestigt.

12. Antirutschvorrichtung (4, 404) für Kraftfahrzeugräder, nach einem der Ansprüche 10 und 11, **dadurch gekennzeichnet, dass** der zentrale Schenkel oder die zentrale Stange durch eine planare Struktur, quadratisch oder rautenförmig ersetzt wird, auf der die Seitenschenkel befestigt sind.

13. Antirutschvorrichtung (4, 404) für Kraftfahrzeugräder, nach einem der Ansprüche 1 bis 13, **dadurch gekennzeichnet, dass** die Seitenschenkel eine geradlinige oder gekrümmte Form haben, wie zum Beispiel eine S- Form.

14. Antirutschvorrichtung (4, 404) für Kraftfahrzeugräder, nach Anspruch 9, **dadurch gekennzeichnet, dass** das freie Endstück jedes der Seitenschenkel außerdem mit Mitteln zur Befestigung an den angrenzenden Antirutsch-Abschnitten dieser Führungsfläche der Antirutschvorrichtung versehen sind.

15. Antirutschvorrichtung (4, 404) für Kraftfahrzeugräder, nach Anspruch 14, **dadurch gekennzeichnet, dass** die Befestigungsmittel aus Zonen (318, 319, 320, 321) bestehen, deren Durchmesser oder Abmessungen kleiner sind als der Rest dieses Verbindungselementes und dass die Endstücke dieser Litze eine Auskragung oder Ausstülpung (341) enthalten, die als Verankerung dieser Litze innerhalb der Schenkel dient.

16. Antirutschvorrichtung (4, 404) für Kraftfahrzeugräder, nach Anspruch 14, **dadurch gekennzeichnet, dass** die Befestigungsmittel aus Mündungsöffnungen besteht, durch die ein Befestigungselement mit zwei Abschnitten der Antirutschvorrichtung hindurchführen soll, diese Litze ist auf sich selbst zurückgebogen um mindestens eine Schlaufe zu bilden, die zwei Mündungsöffnungen von zwei Endstücken von gegenüberliegenden Seitenzweigen umschlingt.

17. Antirutschvorrichtung (4, 404) für Kraftfahrzeugräder, nach einem der Ansprüche 1 bis 16, **dadurch gekennzeichnet, dass** die Verbindungselemente und die Antirutschschuhe aus Polyurethan und ganz allgemein aus Elastomer bestehen.

18. Antirutschvorrichtung (4, 404) für Kraftfahrzeugräder, nach einem der Ansprüche 1 bis 17, **dadurch gekennzeichnet, dass** die Verformungskapazität der Führungsfläche entsprechend der Richtung der Lauffläche, zwischen 84 und 144 Millimeter liegt.

## Claims

1. Anti-skid device (4, 404) for wheels of automotive vehicles, including:
• a rolling path intended to be affixed onto the tread of a tire of a vehicle wheel (5), itself including multiple means (2, 3, 402, 403) developing anti-skid properties interlinked by means of joining parts (1, 101, 201, 301, 401), with the joining parts incorporating at least two branches (6, 7, 106, 107, 206, 207, 306, 307) referred to as lateral branches oriented essentially in the principal direction of the rolling path, with the said branches being integral with each other at least in their central part;
• radial arms (412) maintaining the said rolling path onto the tread of the said tire, connected to a central component affixed onto the rim of the wheel in question;
**characterized in that**:
• the said joining parts have a capacity for distortion allowing the extremities of the said branches to approach or distance themselves to or from each other;
• and **in that** it incorporates a textile bead (40, 140, 240, 340, 405) formed by high-tenacity filaments or at least one metal cable, with the said textile bead or the said metal cable being maintained within each of the joining parts and, more precisely, within each of its branches by appropriate means.

2. Anti-skid device (4, 404) for wheels of automotive vehicles in accordance with claim 1, **characterized in that** the aforesaid at least one textile bead (40, 140, 240, 340, 405) incorporates a core formed by filaments based on aramid fibers and, in a general manner, based on high-modulus textile fibers.

3. Anti-skid device (4, 404) for wheels of automotive vehicles in accordance with claim 2, **characterized in that** the said at least one textile bead (40, 140, 240, 340, 405) incorporates a sheathing formed by fiber-based filaments in a material chosen from the group including polyamids, polyesters and polypropylene.

4. Anti-skid device (4, 404) for wheels of automotive vehicles in accordance with one of claims 1 to 3, **characterized in that** the said at least one textile bead incorporates a circular section of which the diameter is between 2 and 6 millimeters.

5. Anti-skid device (4, 404) for wheels of automotive vehicles in accordance with one of claims 1 to 4, **characterized in that** the rolling path is continuous, with the joining parts (401) being connected to the adjacent anti-skid sections (402, 403) subsequent to a molding operation, with the exception of the sections (410) providing the connection with the radial arms (411) holding the rolling path to which the said joining parts on the tread of the tire in question belong.

6. Anti-skid device (4, 404) for wheels of automotive vehicles in accordance with claim 5, **characterized in that** the rolling path is composed of multiple sub-sections joined to each other at their free ends, with each sub-section being composed of an alternation of joining parts (401) and anti-skid sections (402, 403), and with the areas of connection between the sub-sections being composed of the sections (410) maintaining the rolling path onto the tread of the tire in question.

7. Anti-skid device (4, 404) for wheels of automotive vehicles in accordance with claim 6, **characterized in that** the number of sub-sections is between three and six, and is advantageously four.

8. Anti-skid device (4, 404) for wheels of automotive vehicles in accordance with one of claims 6 and 7, **characterized in that** each sub-section incorporates two textile beads (405) or two metal cables essentially transiting the principal direction of the rolling path, in close proximity to the respective lateral edges of the said sub-section, with the extremities of the beads of two adjacent sub-sections being stitched together, or with the ends of two metal cables being combined together, before proceeding with the production step, notably by molding of the section (410) maintaining the rolling path onto the tread.

9. Anti-skid device (4, 404) for wheels of automotive vehicles in accordance with one of claims 1 to 4, **characterized in that** the rolling path is discontinuous, with each joining part being connected to the adjacent anti-skid sections by means of connecting components typically staples looped at the free extremities of the branches constituting the said joining parts.

10. Anti-skid device (4, 404) for wheels of automotive vehicles in accordance with one of claims 1 to 9, **characterized in that** the two branches (6, 7, 106, 107, 206, 207) of the joining parts are connected to each other by means of a central rod or branch (46, 146, 246).

11. Anti-skid device (4, 404) for wheels of automotive vehicles in accordance with claim 10, **characterized in that** the central branch or rod (246) of each joining part is associated with an additional cross-shaped structure, with the extremities of each of the component branches (260, 261) of the cross being integral with the extremities of the lateral branches.

12. Anti-skid device (4, 404) for wheels of automotive vehicles in accordance with one of claims 10 and 11, **characterized in that** the central branch or rod is replaced by a planar structure of square or lozenge shape, with which the lateral branches are integral.

13. Anti-skid device (4, 404) for wheels of automotive vehicles in accordance with one of claims 1 to 12, **characterized in that** the lateral branches have a straight or curved form, such as an S shape, for example.

14. Anti-skid device (4, 404) for wheels of automotive vehicles in accordance with claim 9, **characterized in that** the free extremity of each of the branches is also endowed with means of connection to the adjacent anti-skid sections of the said rolling path of the anti-skid device.

15. Anti-skid device (4, 404) for wheels of automotive vehicles in accordance with claim 14, **characterized in that** the means of connection are composed of areas (318, 319, 320, 321) of smaller diameter or size in relation to the rest of the said joining part, and **in that** the extremities of the said bead have a protrusion or excrescence (341) implementing the function of anchoring the said bead within the branches.

16. Anti-skid device (4, 404) for wheels of automotive vehicles in accordance with claim 14, **characterized in that** the means of connection are composed of opening apertures intended to be traversed by a connecting component between two sections of the anti-skid device, with the said bead being folded onto itself to form at least one loop joining two opening apertures of two extremities of opposing lateral branches.

17. Anti-skid device (4, 404) for wheels of automotive vehicles in accordance with one of claims 1 to 16, **characterized in that** the joining parts and the anti-skid pads are made of polyurethane and, generally, of elastomer.

18. Anti-skid device (4, 404) for wheels of automotive vehicles in accordance with one of claims 1 to 17, **characterized in that** the capacity for distortion of the rolling path according to the direction of the tread is between 84 and 144 millimeters.
